# EUROPEAN PATENT SPECIFICATION

(11) **EP 2 472 194 B1**
(45) Date of publication and mention of the grant of the patent: **13.02.2013**
(21) Application number: 10197196.8
(22) Date of filing: 28.12.2010
(51) Int. Cl.: F24J 2/05, F24J 2/40, F24J 2/46

(54) **Method for performing an exhaust cycle of a vacuum solar thermal panel**
Verfahren zum Durchführen eines Abgaszyklus eines thermischen Vakuum-Sonnenkollektors
Procédé permettant d'exécuter un cycle d'échappement de panneau thermique solaire sous vide

(43) Date of publication of application: 04.07.2012
(73) Proprietor: TVP Solar S.A., 1204 Geneva (CH)
(72) Inventor: Palmieri, Vittorio, 1202 Geneva (CH)
(74) Representative: Botti, Mario

(56) References cited:
- WO-A1-2005/075900
- WO-A2-2010/003653

## Description

### Field of application

The present invention relates to a method for performing an exhaust cycle of a vacuum solar thermal panel.

### Prior art

As it is well known, vacuum solar thermal panels comprise at least a flat vacuum tight envelope with a glass plate transparent to visible solar radiation. Inside the vacuum envelope are disposed heat absorbers and a pipe entering and exiting the envelope connected to the heat absorbers.

The solar radiation thus enters the vacuum envelope through the glass plate and is absorbed by the heat absorbers and converted into heat. The converted heat is transferred to the pipe and to a heat transfer fluid flowing in the pipe.

Vacuum is kept inside the envelope enclosing the heat absorbers and part of the pipe connected to them, in order to prevent heat from escaping to the external environment by means of convection.

A vacuum solar thermal panel of the known type is described for instance in the PCT application published under No. WO 2010/003653 in the name of the same Applicant. Also known from the PCT application published under No. WO 2005/075900 is an evacuable flat panel solar collector.

It is known that vacuum solar thermal panels require limited outgassing from their inside surfaces in order to maintain the internal pressure at the required level for several years by means of a suitable getter pump.

More particularly, outgassing is reduced by means of an exhaust cycle in which the panel temperature is increased in order to provide energy to facilitate desorption of gases from the inside surfaces, while having the panel connected to a vacuum pump to exhaust such gases.

The duration of the exhaust cycle and the final level of inside surfaces outgassing are strictly related to the maximum temperature reached by the panel during the exhaust cycle.

The maximum temperature of such exhaust cycle should be higher than the maximum temperature reached by any part of the panel during normal operation to avoid additional bursts of outgassing, which in turn could increase significantly the pressure inside the panel and/or reduce the pumping capacity of the getter pump connected to it. The reduction in pumping speed as a function of absorbed gas quantity is known for each type of getter.

In particular, the maximum temperature reached during the exhaust cycle by the heat absorbers of the panel should be higher than that reached by the same under stagnation (i.e. when the panel is exposed to maximum solar irradiance, with no fluid flowing in the pipe connected to it). It is known that, for high quality vacuum solar thermal panel, such a maximum temperature may exceed 300°C.

Known methods for performing an exhaust cycle of a vacuum solar thermal panel and outgassing its inside surfaces require that the panel is attached to a vacuum pump and inserted in an oven, where its temperature is carefully increased, taking care of not exceeding structural limitations for the various panel components.

It can be verified that the constituents of the glass-metal seal enabling the panel often limit the maximum temperature allowed for the above indicated exhaust cycle and thus for the outgassing of its inside surfaces. In particular, the solidus temperature or the softening temperature of the materials used in such seals set an ultimate limit that should not be approached since these seals are already severely affected by structural stress and deformation due to both atmospheric pressure and differences in constituent materials thermal dilatation.

According to WO 2010/003653, an evacuation process is performed at a temperature above 200°C. Such process would be limited in maximum temperature by the transformation temperature of the frit glass used in the glass metal seal, which for vitreous type is generally close to 320°C. In such case, a maximum exhaust temperature of 270°C should be used (as a general rule, 50°C less than the transformation temperature can be reached). However, considering that the maximum temperature reached by highly selective solar absorbers enclosed by high vacuum, in case of panel stagnation, can easily exceed 300°C, the described exhaust cycle would not exceed the maximum temperature that the solar absorber can reach during panel operation and this would result in a partial and incomplete panel outgassing.

Also in WO 2005/075900, the maximum exhaust temperature of the described exhaust process is limited by the solidus temperature of the soft metal ribbon used for the glass-metal seal, being generally lead or lead alloy and, unless special alloys are used, it cannot exceed the maximum temperature reached by highly selective solar absorber enclosed by high vacuum in case of panel stagnation.

According to these known methods, the stagnation of the panel would thus generate unwanted additional outgassing that will affect the performances of the panels so obtained by increasing their internal pressure and/or reducing the pumping capacity of the getter pump connected to them.

The technical problem underlying the present invention is that of providing a method for performing an exhaust cycle of a vacuum solar thermal panel which guarantees that outgassing of its inside surfaces taking place during the panel stagnation is kept at a desirable level, in this way overcoming the limits that still affect the methods realised according to the prior art.

### Summary of the invention

The solution idea underlying the present invention is that of performing an exhaust cycle of a vacuum solar thermal panel keeping the temperature of some selected components at a higher temperature than that of the vacuum envelope of the panel; this difference in temperature being obtained by means of selective heating of such selected components.

On the basis of such solution idea the technical problem is solved by a method for performing an exhaust cycle of a vacuum solar thermal panel comprising a heating phase of the overall panel up to a maximum temperature, being the temperature sustainable by at least a panel component, characterized by comprising a further heating phase being a selective heating phase of some selected panel components, this further heating phase being performed at a second temperature which is greater than said maximum temperature.

Advantageously, said second temperature is sustainable by said selected components.

Moreover, said second temperature is selected in the range between 250 and 550 °C.

The selective heating phase is performed concurrently with said first heating phase.

The selective heating phase involves a solar absorber incorporated into said panel.

Moreover, the selective heating phase comprises an irradiation of said panel.

Furthermore, the selective heating phase comprises an irradiation of said panel, for instance with electromagnetic radiation in the visible range.

As an alternative, the selective heating phase comprises an irradiation of said panel, for instance with a Radio Frequency electromagnetic radiation.

Advantageously, the first heating phase of the overall panel is performed in an oven up to said maximum temperature.

The characteristics and advantages of the method for performing an exhaust cycle of a vacuum solar thermal panel according to the invention will be apparent from the following description.

### Brief description of the drawings

In the drawings:

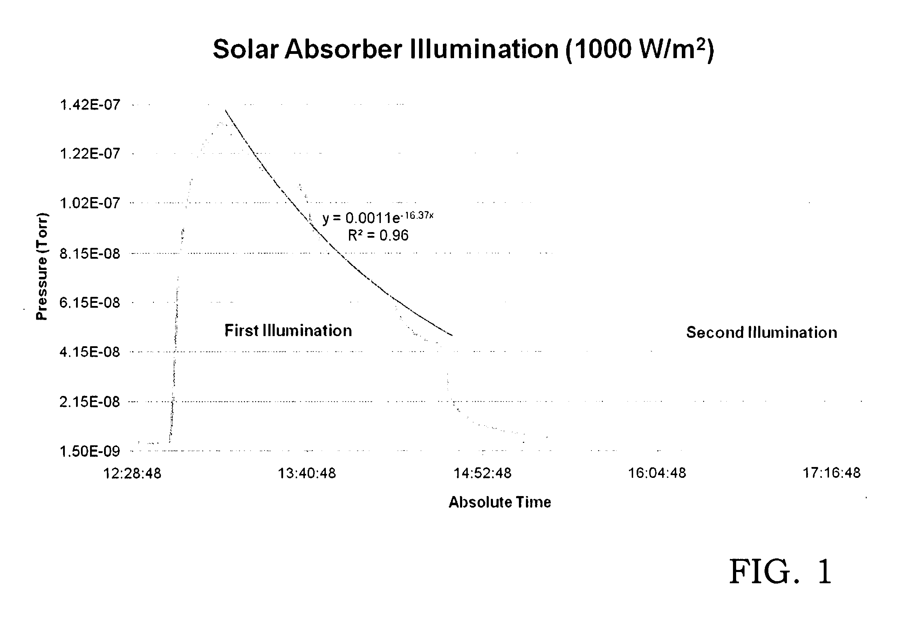

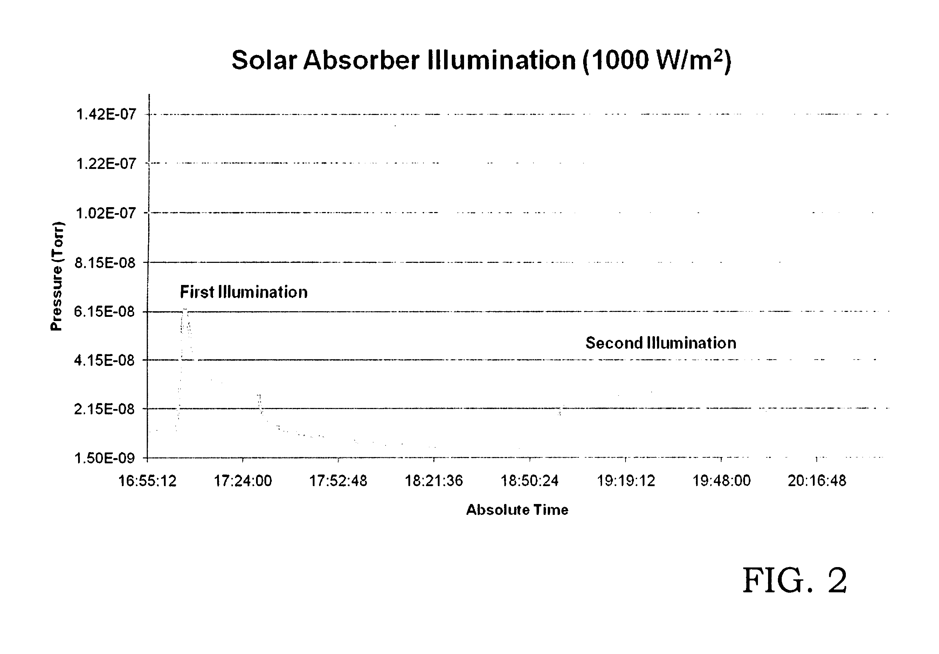

Figures 1 and 2 schematically show in respective diagrams the results of experiments carried out by the applicant using the known and inventive methods, respectively.

### Detailed description

The present invention relates to a method for performing an exhaust cycle of a vacuum solar thermal panel in which the temperature of some selected components is kept at a higher temperature than that of the vacuum envelope of the panel by means of selective heating of such selected components. In particular, in a preferred embodiment of the invention, the selected component is the solar absorber comprised in the panel.

More in particular, the method comprises a first heating phase of the overall panel up to a predetermined maximum temperature Tm, being the temperature sustainable by at least a component, i.e. at least one of the constituent materials of the vacuum envelope.

During this first heating phase the overall panel is heated in the oven.

According to an aspect of the invention, the method also comprises a second heating phase, in particular a selective heating phase of some selected components of the panels, this selective heating phase being performed at a second temperature Th which is greater than the maximum temperature Tm sustainable by at least one of the constituent materials of the panel, but sustainable just by selected components of the same panel. This second temperature Th is in the range 250 - 550°C.

According to a preferred aspect of the invention, the selective heating phase involves the solar absorber incorporated into the panel.

Moreover, according to another aspect of the invention, the selective heating phase is performed concurrently with the first heating phase.

In particular, a selective heating of the solar absorber is achieved by an illumination inside the oven with visible light, which goes through the transparent glass plate of the vacuum envelope of the panel and is absorbed by the selective coating of the solar absorber, increasing its temperature.

Alternatively, a selective heating of the solar absorber is achieved by irradiation with Radio Frequency electromagnetic radiation, which goes through the electrically insulating glass plate of the vacuum envelope of the panel and induces currents in the selective metal sheet being part of the solar absorber, increasing its temperature.

The use of the visible light and/or of RF electromagnetic radiation are only examples for achieving the selective heating phase of the method according to the present invention.

In this way, a better outgassing of the panel is obtained. Hence, the method for performing an exhaust cycle for a vacuum solar thermal panel according to the present invention allows obtaining solar panels with high vacuum inside and therefore good performances, also in case of prolonged stagnation at higher temperature than the maximum temperature sustainable by the constituent materials of the vacuum envelope.

The reduced outgassing obtained with the inventive method is particularly related the solar absorber comprised in the panel.

In the diagram of Figure 1 it is reported a pressure increase due to outgassing of a highly selective solar absorber of a panel placed under stagnation with a solar irradiance of 1000 W/m²and reaching a temperature of 300°C. In particular, the solar absorber undergoes to an integral heating phase with the overall panel at a temperature Tm of 270°C, an integral exhaust process being provided as described with reference to the prior art. The first peak of the diagram thus corresponds to the additional outgassing due to the incomplete exhaust process as already explained.

In the diagram of Figure 2 it is reported a pressure increase due to outgassing of a highly selective solar absorber placed under stagnation with a solar irradiance of 1000 W/m² and reaching a temperature of 300°C. In this case, the solar absorber is concurrently subjected to an integral heating phase with the overall panel at a temperature Tm of 270°C (in oven) and to a selective heating (with a corresponding local exhaust process) at a temperature Th of 325°C (relating only the absorber) by means of visible light illumination inside the oven. It should be thus remarked that, by implementing the selective heating, no large outgassing peak is observed, due to the so obtained more complete exhaust of the solar absorber.

These reports are the result of experiments carried out by the Applicant using the inventive method.

In essence, with the method of the present invention, it will be possible to reach a maximum temperature during the exhaust cycle well above the stagnation temperature of the solar absorber reducing its outgassing. This in turn will preserve the pumping capacity of the getter pump, and hence extend the panel lifetime and/or reduce the amount of getter material required.

Obviously, a technician of the field, aiming at meeting incidental and specific needs, will bring several modifications to the above described method, all within the scope of protection of the invention as defined by the following claims.

## Claims

1. Method for performing an exhaust cycle of a vacuum solar thermal panel while having the panel connected to a vacuum pump to exhaust desorpted gases, comprising a heating phase of the overall panel up to a maximum temperature (Tm), being the maximum temperature sustainable by at least a panel component, **characterized by** comprising a further heating phase being a selective heating phase of some selected panel components, this further heating phase being performed at a second temperature (Th) which is greater than said maximum temperature (Tm).

2. Method according to claim 1, **characterized in that** said second temperature (Th) is sustainable by said selected components.

3. Method according to claim 1, **characterized in that** said second temperature (Th) is between 250 and 550°C.

4. Method according to any of the preceding claims, **characterized in that** said selective heating phase is performed concurrently with said first heating phase.

5. Method according to any of the preceding claims, **characterized in that** said selective heating phase involves a solar absorber comprised into said panel.

6. Method according to any of the preceding claims, **characterized in that** said selective heating phase comprises an irradiation of said panel.

7. Method according to claim 6, **characterized in that** said irradiation of said panel is performed with electromagnetic radiation in the visible range.

8. Method according to claim 7, **characterized in that** said irradiation of said panel is performed with Radio Frequency electromagnetic radiation.

9. Method according to any of the preceding claims, **characterized in that** said first heating phase the overall panel is performed in an oven up to said maximum temperature (Tm).

## Patentansprüche

1. Verfahren zum Ausführen eines Absaugzyklus einer solarthermischen Vakuumplatte, während die Platte mit einer Vakuumpumpe verbunden ist, um desorbierte Gase abzusaugen, welches eine Erwärmungsphase der gesamten Platte bis zu einer Maximaltemperatur (Tm) umfasst, die die von mindestens einer Plattenkomponente ertragene Maximaltemperatur ist, **gekennzeichnet durch** das Umfassen einer weiteren Erwärmungsphase, die eine selektive Erwärmungsphase von einigen ausgewählten Plattenkomponenten ist, wobei diese weitere Erwärmungsphase bei einer zweiten Temperatur (Th) ausgeführt wird, die größer als die Maximaltemperatur (Tm) ist.

2. Verfahren nach Anspruch 1, **dadurch gekennzeichnet, dass** die zweite Temperatur (Th) von den ausgewählten Komponenten ertragen werden kann.

3. Verfahren nach Anspruch 1, **dadurch gekennzeichnet, dass** die zweite Temperatur (Th) zwischen 250 und 550°C liegt.

4. Verfahren nach einem der vorherigen Ansprüche, **dadurch gekennzeichnet, dass** die selektive Erwärmungsphase gleichzeitig mit der ersten Erwärmungsphase ausgeführt wird.

5. Verfahren nach einem der vorherigen Ansprüche, **dadurch gekennzeichnet, dass** die selektive Erwärmungsphase einen Solarabsorber einbezieht, der in der Platte enthalten ist.

6. Verfahren nach einem der vorherigen Ansprüche, **dadurch gekennzeichnet, dass** die selektive Erwärmungsphase eine Bestrahlung der Platte umfasst.

7. Verfahren nach Anspruch 6, **dadurch gekennzeichnet, dass** die Bestrahlung der Platte mit elektromagnetischer Strahlung im sichtbaren Bereich ausgeführt wird.

8. Verfahren nach Anspruch 7, **dadurch gekennzeichnet, dass** die Bestrahlung der Platte mit elektromagnetischer Radiofrequenzstrahlung ausgeführt wird.

9. Verfahren nach einem der vorherigen Ansprüche, **dadurch gekennzeichnet, dass** die erste Erwärmungsphase der Gesamtplatte in einem Ofen bis zur Maximaltemperatur (Tm) ausgeführt wird.

## Revendications

1. Procédé pour réaliser un cycle d'échappement d'un panneau solaire thermique sous vide, le panneau étant connecté à une pompe à vide pour évacuer des gaz désorbés, comportant une phase de chauffage de l'ensemble du panneau jusqu'à une température maximale (Tm) qui est la température maximale supportable par au moins un composant du panneau, **caractérisé en ce que** ladite méthode comporte une phase de chauffage supplémentaire qui est une phase de chauffage sélectif de certains composants sélectionnés du panneau, cette phase de chauffage supplémentaire étant réalisée à une seconde température (Th) qui est supérieure à ladite température maximale (Tm).

2. Procédé selon la revendication 1, **caractérisé en ce que** ladite seconde température (Th) est supportable par lesdits composants sélectionnés.

3. Procédé selon la revendication 1, **caractérisé en ce que** ladite seconde température (Th) est comprise entre 250 et 550°C.

4. Procédé selon l'une quelconque des revendications précédentes, **caractérisé en ce que** ladite phase de chauffage sélectif est réalisée simultanément avec ladite première phase de chauffage.

5. Procédé selon l'une quelconque des revendications précédentes, **caractérisé en ce que** ladite phase de chauffage sélectif implique un absorbeur solaire compris dans ledit panneau.

6. Procédé selon l'une quelconque des revendications précédentes, **caractérisé en ce que** ladite phase de chauffage sélectif comprend une irradiation dudit panneau.

7. Procédé selon la revendication 6, **caractérisé en ce que** ladite irradiation dudit panneau est réalisée avec une radiation électromagnétique dans le domaine visible.

8. Procédé selon la revendication 7, **caractérisé en ce que** ladite irradiation dudit panneau est réalisée avec une radiation électromagnétique radiofréquence.

9. Procédé selon l'une quelconque des revendications précédentes, **caractérisé en ce que** ladite première phase de chauffage de l'ensemble du panneau est réalisée dans un four jusqu'à ladite température maximale (Tm).
